# FASCICULE DE BREVET EUROPEEN

(11) **EP 0 913 961 B1**
(45) Date de publication et mention de la délivrance du brevet: **10.12.2003**
(21) Numéro de dépôt: 98203538.8
(22) Date de dépôt: 20.10.1998
(51) Int. Cl.: H04B 10/155

(54) **Emetteur optique permettant de réduire le bruit impulsionnel dans une liaison par fibre optique**
Optischer Sender zur Rauschimpulsverringerung in einer faseroptischen Verbindung
Optical transmitter for reducing impulse noise in a fiber optic link

(30) Priorité: 28.10.1997 FR 9713510
(43) Date de publication de la demande: 06.05.1999
(73) Titulaire: BROADBAND ROYALTY CORPORATION, Wilmington, Delaware 19801 (US)
(72) Inventeur: Dubos, Laurent, 75008 Paris (FR); Dumont, François, 75008 Paris (FR)
(74) Mandataire: Beyer, Andreas, Dr.

(56) Documents cités:
- EP-A- 0 683 552
- WO-A-92/17007
- US-A- 4 471 494
- US-A- 5 402 433

## Description

La présente invention concerne un émetteur optique comportant un laser à semi-conducteur destiné à transmettre un signal optique, alimenté par un courant alternatif dit de modulation résultant de la modulation d'au moins une porteuse par un signal modulant analogique ou numérique, et par un courant continu de polarisation régulé à partir d'une mesure de la lumière émise par le laser.

L'invention s'applique aux liaisons optiques utilisant un laser modulé par une pluralité de porteuses formant un multiplex fréquentiel.

Un émetteur optique selon le préambule ci-dessus est connu du document WO 92 17007 A (TELENOKIA OY). Selon ce document, d'une part la valeur de crête du courant de laser est contrôlée au moyen d'un système qui compare deux signaux : un signal (6A) représentant la valeur crête du signal émis par le laser, et un signal (7a) représentant une amplitude constante de signal modulant numérique, obtenue via un limiteur (12), et d'autre part la valeur moyenne du courant de laser est contrôlée au moyen d'un système qui compare deux signaux : un signal (5A) représentant la valeur moyenne du signal émis par le laser, et un signal (8a) représentant l'amplitude du signal modulant numérique, le tout étant destiné à compenser les variations dues à la température et/ou au vieillissement, ainsi qu'une grandeur appelée "extinction ratio".

Le document de brevet américain US-A-5 402 433 décrit un émetteur optique comportant un laser à semi-conducteur alimenté par un courant alternatif de modulation, ledit laser étant régulé de telle manière que la valeur du courant dans le laser soit à tout moment supérieure à la valeur de seuil du laser, pour assurer l'absence de bruit impulsionnel.

Un objet de l'invention est de réduire le bruit impulsionnel susceptible d'affecter une liaison optique utilisant un laser semi-conducteur.

Les émetteurs qui utilisent un laser à semi-conducteur sont entachés de bruits dont l'origine peut être multiple. Le plus souvent le bruit dans le signal reçu est stationnaire: tel est le cas du bruit d'origine thermique ou du bruit résultant du caractère granulaire de l'électricité ou de la lumière (bruit quantique). Cependant dans certains cas, le signal peut être entaché d'un bruit formé d'impulsions brèves dont l'amplitude et la fréquence sont aléatoires. Ce bruit impulsionnel est généré en particulier lorsque le laser est modulé par un signal présentant des crêtes suffisamment intenses pour que le courant traversant le laser prenne, par instants, une valeur inférieure à la valeur du courant de seuil du laser, ou bien lorsque le laser est faiblement modulé, auquel cas le bruit impulsionnel est provoqué par la rétrodiffusion de la lumière injectée dans la fibre optique ; le laser devient en effet instable lorsqu'il est exposé à la lumière rétrodiffusée et cette instabilité se traduit par l'apparition d'un bruit impulsionnel affectant la puissance optique émise par le laser.

Dans le cas d'une pluralité de signaux formant un multiplex fréquentiel, le nombre et/ou l'amplitude des signaux multiplexés peut varier de façon imprévisible au cours du temps, le multiplex étant par exemple formé de signaux émis par un certain nombre d'utilisateurs qui se connectent ou se déconnectent à des instants imprévisibles de sorte que le nombre de canaux constituant le multiplex peut varier entre zéro et un nombre élevé. Le laser se trouve très faiblement modulé lorsqu'un petit nombre d'utilisateurs sont simultanément actifs, le signal présente alors un bruit impulsionnel.

Pour résoudre ce problème, alors que l'amplitude du signal modulant peut varier de façon imprévisible au cours du temps, l'émetteur est muni de moyens pour modifier la valeur régulée du courant continu de polarisation en fonction de la valeur de crête du signal modulant, de telle manière que la valeur du courant dans le laser soit d'une part en toute circonstance supérieure à la valeur minimale nécessaire pour assurer l'absence de bruit impulsionnel qui pourrait être produit en cas d'écrêtage d'un signal de fort niveau par le laser, et d'autre part suffisamment faible pour assurer une profondeur de modulation suffisante au niveau du laser lorsque le signal modulant est de faible amplitude.

C'est donc la valeur de crête variable du signal modulant qui commande la valeur de consigne du courant continu de polarisation.

De préférence, les dits moyens comportent un détecteur de crête détectant la valeur crête du signal modulant, et un dispositif de régulation de la puissance optique moyenne émise qui est asservi à la tension délivrée par le détecteur de crête, ce dispositif de régulation de la puissance optique moyenne émise comprenant avantageusement un transistor utilisé en mode conductance variable, placé dans une branche d'un pont de résistances.

Ainsi, le dispositif est à la fois efficace et simple.

Une méthode fréquemment utilisée pour combattre le bruit impulsionnel dû à la rétrodiffusion dans la fibre consiste à moduler le laser à l'aide d'un signal d'amplitude suffisante. Dans ces conditions, en effet, la longueur d'onde de la lumière émise par le laser varie au rythme de la modulation et par conséquent, le laser est exposé à une lumière rétrodiffusée dont la longueur d'onde est, à chaque instant, légèrement différente de la longueur d'onde émise. Il en résulte une réduction de la sensibilité du laser à la lumière rétrodiffusée. Pour cela il est connu d'ajouter au signal à transmettre une onde sinusoïdale non modulée (ou porteuse factice) ayant pour but d'empêcher que la profondeur de modulation du signal optique ne descende au dessous d'une valeur minimale suffisante pour éviter l'apparition du bruit impulsionnel. Cette méthode présente toutefois un certain nombre d'inconvénients :
- la porteuse factice limite la profondeur de modulation disponible pour les signaux à transmettre et produit, par intermodulation avec les porteuses utiles, des battements qui dégradent la qualité du signal reçu et constituent des sources d'erreur dans une liaison numérique.
- la présence de la porteuse factice constitue une charge inutile pour le laser et aggrave les phénomènes d'écrêtage ainsi que le bruit impulsionnel causé par l'écrêtage.

Pour éviter ces inconvénients, un émetteur muni d'un générateur d'une porteuse auxiliaire comprend en outre des moyens pour asservir l'amplitude de cette porteuse auxiliaire à la valeur de crête du dit signal modulant.

Ces aspects de l'invention ainsi que d'autres aspects plus détaillés apparaîtront plus clairement grâce à la description suivante d'un mode de réalisation constituant un exemple non limitatif.
La figure 1 représente une caractéristique courant/puissance d'un laser.
La figure 2 représente la variation de la puissance optique moyenne émise par le laser en fonction du niveau du signal à transmettre.
La figure 3 est un exemple de schéma d'un circuit d'émetteur optique conforme à l'invention.
La figure 4 est un schéma d'un autre exemple d'un circuit d'émetteur optique conforme à l'invention.

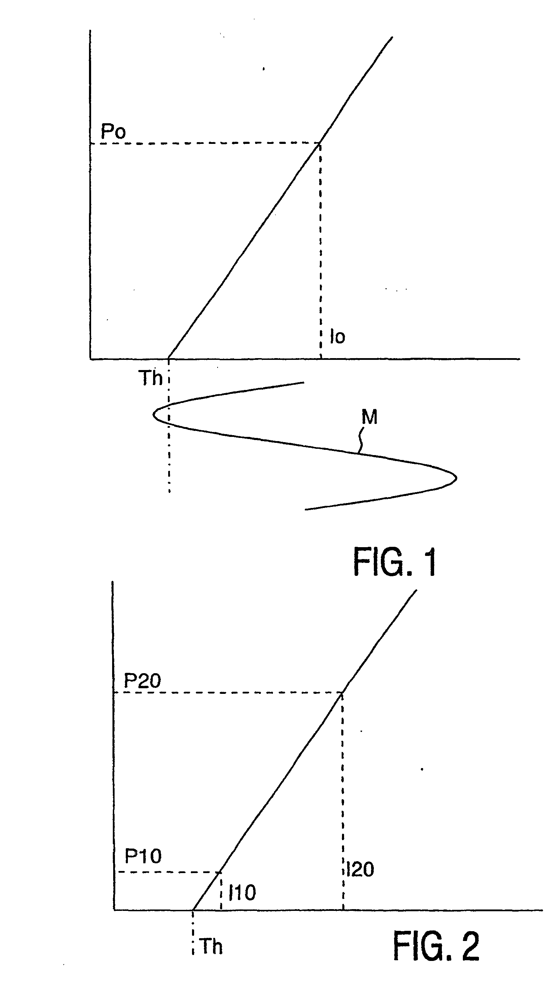

Une caractéristique courant/puissance de laser est illustrée par la figure 1. L'ordonnée représente la puissance émise et l'abscisse le courant dans le laser. Le courant total est composé d'un courant continu Io de polarisation, dont la valeur est supérieure à la valeur de seuil Th, sur lequel vient se superposer un courant alternatif modulant le laser, constitué à partir d'une pluralité de porteuses modulées en amplitude, en fréquence, ou en phase, constituant un multiplex, et schématisé par la courbe M. Les crêtes négatives du courant modulant présentent une amplitude suffisamment élevée pour que le courant traversant le laser se situe, par instants, au dessous du courant de seuil du laser, ce qui a pour effet de provoquer l'extinction du laser. Cette extinction de courte durée est équivalente à l'addition d'une impulsion positive brève au signal utile.

L'invention consiste à faire varier la puissance moyenne émise par le laser en fonction de l'amplitude des signaux M présents à l'entrée de l'émetteur en faisant en sorte que la puissance optique moyenne émise soit faible lorsque l'amplitude des signaux présents à l'entrée de l'émetteur est faible, ce qui permet d'imposer une valeur suffisamment élevée pour la profondeur de modulation du signal optique et d'éviter l'apparition du bruit impulsionnel dû à la rétrodiffusion dans la fibre, même lorsque le signal à transmettre présente son amplitude minimale. Au contraire, lorsque le nombre des porteuses à transmettre est grand et que l'amplitude de ces porteuses est élevée, le circuit de commande de la puissance moyenne émise polarise le laser à son niveau de puissance nominale de sorte que la probabilité d'écrêter le signal utile par le bas se trouve minimisée.

La figure 2 illustre cette variation : lorsque le signal à transmettre est de faible amplitude, le laser est polarisé par un courant I10 de faible valeur de manière à assurer une valeur suffisamment élevée pour la profondeur de modulation assurant ainsi l'absence du bruit impulsionnel. Par contre lorsque le signal à transmettre est de forte amplitude, le laser est polarisé par un courant 120 plus important. Il est vrai que, avec un courant de polarisation ayant tout simplement une forte valeur en permanence, on éviterait l'écrêtage par le bas, mais cela aurait l'inconvénient qu'un courant élevé, d'une part réduirait la durée de vie du laser, et d'autre part imposerait une faible profondeur de modulation au niveau du laser lorsque le signal modulant est de faible amplitude, produisant dans ce cas un fort niveau de bruit impulsionnel dû à la rétrodiffusion dans la fibre.

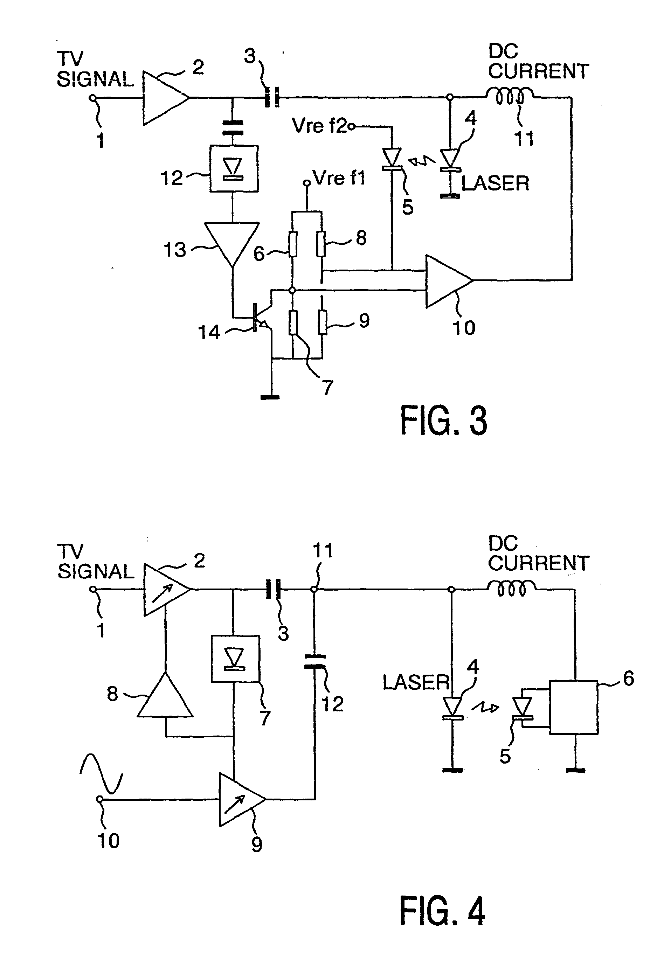

Dans le circuit d'émetteur de la figure 3, un signal à transmettre est présenté à l'entrée 1 puis amplifié et adapté en impédance par un amplificateur 2, et transmis au laser 4 via un condensateur de liaison 3. La fourniture du courant continu de polarisation est assurée par un circuit de stabilisation de la puissance optique émise, qui est constitué d'une photodiode de contrôle 5 couplée optiquement au laser, et d'un ensemble de quatre résistances 6, 7, 8, 9 formant un pont. Les valeurs ohmiques des résistances constituant le pont sont choisies de telle sorte que l'équilibre du pont soit réalisé lorsque le courant traversant la photodiode 5 atteint sa valeur nominale, c'est-à-dire pour la puissance optique nominale du laser. Un amplificateur différentiel 10 ayant ses deux entrées connectées suivant une diagonale du pont assure l'alimentation du laser en courant de polarisation à travers une inductance 11 destinée à interdire le passage du signal alternatif. En pratique, le réglage de la puissance optique émise est obtenu en faisant varier la valeur de l'une au moins des résistances 6, 7, 8 ou 9. D'autre part le signal en sortie de l'amplificateur 2 est amené à un détecteur de crête 12. Le signal de sortie du détecteur de crête 12 est un signal proportionnel à l'amplitude de crête du signal attaquant le laser. Ce signal est amplifié par un amplificateur 13, dont le signal de sortie contrôle la conductance d'un transistor 14, ici de type bipolaire mais qui pourrait aussi être de type MOS, fonctionnant en mode conductance variable, et branché en parallèle sur la branche 7 du pont de résistances de telle sorte qu'une variation de la tension de sortie de l'amplificateur 13 déplace l'équilibrage du pont et par conséquent modifie la valeur de la puissance émise par le laser.

Ce circuit permet donc de faire varier la puissance moyenne émise par le laser en fonction du niveau de signal présent à l'entrée de l'émetteur. La polarité des tensions, le signe du gain des amplificateurs, et l'emplacement de la branche aux bornes de laquelle est connecté le transistor 14 sont choisis de telle manière qu'en présence d'un signal d'entrée d'amplitude faible ou nulle, le laser émet une puissance optique faible. Au contraire lorsque le signal d'entrée a une amplitude maximale, le circuit impose au laser d'émettre une puissance optique plus grande.

Il arrive fréquemment qu'un générateur produisant une onde sinusoïdale auxiliaire soit inclus dans un émetteur afin de transmettre les signaux de service, qui sont alors transmis en modulant la fréquence de l'onde sinusoïdale auxiliaire. Par conséquent il n'y a aucune objection à faire varier l'amplitude de la porteuse auxiliaire en fonction de la présence et de l'amplitude des porteuses principales, à condition de s'assurer que l'amplitude de la porteuse auxiliaire reste en toute circonstance suffisante pour assurer une transmission correcte des signaux de service. De même il arrive fréquemment qu'un circuit capable de détecter la présence et l'amplitude des signaux transmis soit utilisé dans les émetteurs optiques pour une commande automatique de gain, dans le but d'éviter une saturation ou un écrêtage du signal émis par l'émetteur optique. Il est donc possible de prélever un signal de commande automatique de gain, dont l'amplitude varie en fonction du niveau des porteuses appliquées à l'entrée, et de commander à partir de ce signal un amplificateur à gain réglable inséré entre le générateur d'onde sinusoïdale auxiliaire et le laser.

Dans le circuit d'émetteur de la figure 4, le signal à transmettre est présenté à l'entrée 1 puis amplifié et adapté en impédance par des moyens d'amplification 2, et transmis au laser via un condensateur de liaison 3. L'alimentation en courant de polarisation du laser est assurée par un ensemble constitué d'une photodiode 5 et d'un circuit de stabilisation 6 connu en soi. L'émetteur est également muni d'un dispositif de commande automatique de gain connu en soi, constitué d'un détecteur de crête 7 dont la tension de sortie commande le gain de l'amplificateur 2 par l'intermédiaire d'un amplificateur 8. Un générateur connu non représenté fournit sur une borne 10 une onde sinusoïdale dont la fréquence est située en dehors de la bande passante de l'amplificateur 2, éventuellement modulée par des signaux d'information de service. L'amplitude de cette onde est modifiée par un amplificateur à gain réglable 9, contrôlé par le circuit 7 détectant la présence et l'amplitude des signaux appliqués à l'émetteur optique. Le signal sortant de l'amplificateur 9 parvient au laser 4 via un condensateur de liaison 12. Le sens de variation du gain des différents éléments est choisi de telle façon que l'amplitude de l'onde sinusoïdale transmise de la borne 10 vers le laser 4 soit maximale lorsqu'aucun signal n'est présent à l'entrée principale 1 de l'émetteur optique. Au contraire la présence d'un signal produit une diminution du gain de l'amplificateur 9 et par conséquent une diminution de l'amplitude de l'onde sinusoïdale transmise de la borne 10 vers le laser 4 de telle sorte que la profondeur de modulation au niveau du laser 4 soit, en toute circonstance, au moins égale au minimum requis pour assurer l'absence de bruit impulsionnel en sortie du laser.

En cas de besoin, les moyens décrits à propos des figures 3 et 4 peuvent être ajoutés l'un à l'autre : il suffit par exemple d'ajouter les éléments 9, 10, 12 de la figure 4 dans le circuit de la figure 3.

## Revendications

1. Emetteur optique comportant un laser à semi-conducteur (4) destiné à transmettre un signal optique et alimenté par un courant alternatif dit de modulation (M; 1) résultant de la modulation d'au moins une porteuse par un signal modulant analogique ou numérique, ainsi que par un courant continu de polarisation (I₀; I₁₀, I₂₀) régulé a partir d'une mesure de la lumière émise par le laser (4), **caractérisé en ce que**, alors que l'amplitude du signal modulant (M; 1) peut varier de façon imprévisible au cours du temps, l'émetteur est muni de moyens (5-14) pour modifier la valeur régulée du courant continu de polarisation (I₀;I₁₀,I₂₀) en fonction de la valeur de crête du signal modulant, (M; 1) de telle manière que la valeur du courant dans le laser (4) soit d'une part en toute circonstance supérieure à la valeur de seuil du laser (4) , et d'autre part suffisamment faible pour assurer une profondeur de modulation prédéterminée au niveau du laser (4) lorsque le signal modulant (M; 1) est de faible amplitude.

2. Emetteur optique selon la revendication 1, **caractérisé en ce que** les dits moyens (5-14) comportent un détecteur de crête (12) détèctant la valeur crête du signal modulant, (M; 1) et un dispositif (13, 14, 5-11) de regulation de la puissance optique moyenne émise qui est asservi à la tension délivrée par le détecteur de crêtete (12).

3. Emetteur optique selon la revendication 2, **caractérisé en ce que** le dispositif (13, 14, 5-11) de régulation de la puissance optique moyenne émise comprend un transistor (14) utilisé en mode conductance variable, placé dans une branche d'un pont de résistances (6-9).

4. Emetteur optique selon la revendication 1, **caractérisé en ce qu'**il est muni d'un générateur (10) d'une porteuse auxiliaire et comprend en outre des moyens (7, 9) pour asservir l'amplitude de cette porteuse auxillaire (10) a la valeur de crête du dit signal modulant (M; 1).

## Claims

1. Optical transmitter comprising a semiconductor laser (4) for transmitting an optical signal, and powered by an alternating so-called modulating current (M; 1) resulting from the modulation of at least one carrier by an analog or digital modulating signal, and by a polarisation direct current (I₀; I₁₀: I₂₀) which is regulated based on a measurement of the light emitted by the laser (4),
**characterized in that** whereas the amplitude of the modulating signal (M; 1) can vary in an unforeseeable manner over time, the transmitter is equipped with means (5-14) to modify the regulated value of the direct polarisation current (I₀; I₁₀; I₂₀) as a function of the peak value of the modulating signal (M; 1), in such a way that the value of the current in the laser (4) is on the one hand greater in all circumstances than the threshold value of the laser (4), and on the other hand sufficiency low to ensure a predetermined modulation depth at the level of the laser (4) when the modulating signal (M; 1) is of low amplitude.

2. Optical transmitter according to claim 1,
**characterized in that** the said means (5-14) comprise a peak detector (12) which detects the peak value of the modulating signal (M; 1), and a device (13, 14, 5-11) to regulate the emitted mean optical power which follows the voltage supplied by the peak detector (12).

3. Optical transmitter according to claim 2,
**characterized in that** the device (13, 14, 5-11) to regulate the emitted mean optical power comprises a transistor (14) which is used in variable conductance mode and placed in one branch of a resistance bridge (6-9).

4. Optical transmitter according to claim 1,
**characterized in that** it is equipped with a generator (10) of an auxiliary carrier, and also comprises means (7, 9) so that the amplitude of this auxiliary carrier (10) follows the peak value of the said modulating signal (M; 1).

## Patentansprüche

1. Optischer Sender mit einem Halbleiterlaser (4), der dazu bestimmt ist, ein optisches Signal zu übertragen und von einem sogenannten Modulations-Wechselstrom (M; 1) gespeist wird, der sich aus der Modulation von wenigstens einer Trägerschwingung mit einem analogen oder digitalen Modulationssignal ergibt, sowie von einem Polarisations-Gleichstrom (I₀; I₁₀; I₂₀), der ausgehend von einer Messung des durch den Laser (4) emittierten Uchts geregelt wird,
**dadurch gekennzeichnet, dass** der Sender, während die Amplitude des Modulationssignals (M; 1) im Laufe der Zeit unvorhersehbar schwanken kann, mit Mitteln (5-14) versehen ist, um den geregelten Wert des Polarisations-Gleichstroms (Iₒ; I₁₀; I₂₀) in Abhängigkeit vom Spitzenwert des Modulationssignals (M; 1) derart zu verändern, dass der Wert des Stroms im Laser (4) einerseits auf jeden Fall größer ist als der Schwellenwert des Lasers (4) und andererseits klein genug, um eine vorbestimmte Modulationstiefe in Höhe des Lasers (4) zu gewährleisten, wenn das Modulationssignal (M; 1) eine geringe Amplitude hat.

2. Optischer Sender nach Anspruch 1,
**dadurch gekennzeichnet, dass** die Mittel (5-14) einen Spitzenwertdetektor (12) zum Erkennen des Spitzenwerts des Modulationssignals (M; 1) sowie eine Vorrichtung (13, 14, 5-11) zur Regelung der emittierten optischen Durchschnittsleistung umfassen, die der durch den Spitzenwertdetektor (12) gelieferten Spannung folgt.

3. Optischer Sender nach Anspruch 2,
**dadurch gekennzeichnet, dass** die Vorrichtung (13, 14, 5-11) zur Regelung der emittierten optischen Durchschnittsleistung einen Transistor (14) umfasst, der auf einem Zweig einer Widerstandsbrücke (6-9) angeordnet ist.

4. Optischer Sender nach Anspruch 1,
**dadurch gekennzeichnet, dass** er mit einem Generator (10) einer zusätzlichen Trägerschwingung ausgestattet ist und zudem Mittel (7, 9) umfasst, damit die Amplitude dieser zusätzlichen Trägerschwingung (10) dem Spitzenwert des Modulationssignals (M; 1) folgt.
